# EUROPÄISCHE PATENTSCHRIFT

(11) **EP 3 096 108 B1**
(45) Veröffentlichungstag und Bekanntmachung des Hinweises auf die Patenterteilung: **10.07.2019**
(21) Anmeldenummer: 16170440.8
(22) Anmeldetag: 19.05.2016
(51) Int. Cl.: F41H 7/04, B60N 3/06, B60N 2/42

(54) **MILITÄRISCHES FAHRZEUG**
MILITARY VEHICLE
VEHICULE MILITAIRE

(30) Priorität: 22.05.2015 DE 102015108172
(43) Veröffentlichungstag der Anmeldung: 23.11.2016
(73) Patentinhaber: Krauss-Maffei Wegmann GmbH & Co. KG, 80997 München (DE)
(72) Erfinder: Schwippl, Christian, 80997 München (DE); Bayer, Dr. Robert, 80997 München (DE); Prieschl, Walter, 80997 München (DE)
(74) Vertreter: Feder Walter Ebert

(56) Entgegenhaltungen:
- EP-A1- 3 002 541
- EP-B1- 1 593 542
- WO-A1-92/01409
- WO-A2-2007/060405
- DE-A1- 10 130 631
- DE-A1- 19 717 782
- DE-A1-102013 006 938
- JP-A- 2004 249 930

## Beschreibung

Die vorliegende Erfindung betrifft ein Fahrzeug, insbesondere ein militärisches Fahrzeug, mit einem gegen Mineneinwirkung geschützt ausgebildeten Fahrzeuggehäuse, in welchem mindestens ein Fahrzeugsitz und eine dem Fahrzeugsitz zugeordnete Fußauflage vorgesehen sind. DE 197 17 782 A1, DE 10 2013 006938 A1, EP 1 593 542 B1, DE 101 30 631 A1 und WO 2007/060405 A2 offenbaren jeweils ein Fahrzeug mit einem gegen Mineneinwirkung geschützt ausgebildeten Fahrzeuggehäuse, in welchem mindestens ein Fahrzeugsitz und eine dem Fahrzeugsitz zugeordnete Fußauflage vorgesehen sind.

Fahrzeuge dieser Art werden häufig in Krisengebieten eingesetzt, in welchen diese verschiedenen Bedrohungen, wie beispielsweise ballistischen Bedrohungen oder Bedrohungen durch Mineneinwirkung ausgesetzt sind. In letzter Zeit haben sich vor allem Mineneinwirkungen durch sogenannte IEDs ("Improvised Explosive Devices") als kritisch erwiesen, insbesondere dann, wenn diese unterhalb des Fahrzeugs zur Detonation gelangen.

Infolge der Minendetonation entstehen auch als "Blast" bezeichnete Gasschwaden mit sehr hoher kinetischer Energie, die sich von der Explosionsstelle her kommend hochdynamisch auf das Fahrzeug übertragen. Auch wenn ein minengechütztes Fahrzeug diesen Kräften standhält, wird meist der Bodenbereich nach oben durchgebeult, was eine Gefahr für die darin befindlichen Fahrzeuginsassen darstellt. Aus diesem Grund weisen minengeschütze Fahrzeuge eine spezielle Ausbildung der die Fahrzeuginsassen aufnehmenden Fahrzeugsitze und der den Fahrzeugsitzen zugeordneten Fußauflagen, auf welchen die Besatzungsmitglieder während der Fahrt ihre Füße abstellen können, auf.

Durch diese Maßnahmen wird entsprechend der Schutzklasse des Fahrzeugs ein zuverlässiger Schutz für die Fahrzeuginsassen erreicht, selbst im Falle einer unterhalb des Fahrzeugs detonierenden Mine.

Der Schutz stößt dann an seine Grenzen, wenn die Detonationsstärke einer Mine eine sich aus der Schutzklasse des Fahrzeugs ergebende kritische Detonationsstärke überschreitet. Gut gebaute Fahrzeuge weisen daher eine gewisse Überlastfähigkeit auf, so dass die Fahrzeuggehäuse auch solchen Minendetonation standhalten und nicht aufreißen. Probleme können sich jedoch aufgrund der mit der größeren Detonationsstärke einhergehenden größeren Durchbeulung des Gehäusebodens ergeben.

Um Durchbeulungen des Gehäusebodens überhaupt abfangen zu können, sind die Fahrzeugsitze zumeist von dem Gehäuseboden entkoppelt angeordnet, beispielsweise an einer Seitenwand oder am Dach eines Fahrzeuggehäuses. Als besonders kritisch hat sich in diesem Zusammenhang der Fußbereich der Fahrzeuginsassen erwiesen. Die Füße der Fahrzeuginsassen sind daher zumeist auf speziell ausgebildeten, dem Fahrzeugsitz zugeordneten Fußauflagen angeordnet, welche derart gegenüber dem Gehäuseboden entkoppelt ausgebildet sind, dass eine Durchbeulung des Gehäusebodens bis zu einer gewissen Stärke nicht unmittelbar auf diese durchschlägt. Beispielsweise können die Fußauflagen auch von einem zweiten im Inneren des Fahrzeuggehäuses vorgesehenen Boden gebildet werden, der mit einem gewissen Abstand gegenüber dem eigentlichen Gehäuseboden verläuft. Auf diese Weise verbeult sich der Gehäuseboden bei einer Minendetonation zunächst in einen gewissen Leerraum, bevor dieser dann bei Überschreitung einer kritischen Durchbeulung an den inneren Gehäuseboden anschlägt und damit unmittelbar auf die Füße der Fahrzeuginsassen wirkt. Daneben sind auch Fußauflagen bekannt, welche über plastisch verformbare Deformationselemente beabstandet gegenüber dem Gehäuseboden angeordnet sind. Bekannt sind beispielsweise gabelförmig gebogene Deformationselemente, welche infolge einer Durchbeulung des Gehäusebodens deformieren und hierdurch die auftretenden Kräfte nur deutlich reduziert an die Füße der Insassen weitergeben, so dass bedrohliche Verletzungen bis zum Erreichen einer kritischen Durchbeulung nicht zu befürchten stehen.

Bei diesen bekannten Fußauflagen hat es sich als nachteilig erwiesen, dass die Fahrzeuginsassen diesen insbesondere in Gefahrensituationen nicht uneingeschränkt vertrauen. Vor allem in laufenden Kriseneinsätzen kommt es daher in Gefahrensituationen vor, dass die Besatzungsmitglieder ihre Füße zur Sicherheit anheben und in undefinierte Positionen innerhalb des Fahrzeugs bringen. Beispielsweise ist es häufig so, dass Soldaten beim Durchfahren gefährdeter Straßenabschnitte, beispielsweise beim Passieren von Brücken, ihre Füße anheben und auf die Beine eines gegenüber sitzenden Soldaten ablegen.

Dies hat sich im Falle einer Minendetonation aufgrund der damit verbundenen unkontrollierten Bewegungen der teilweise mit massiven Stiefeln versehenen Füße der Soldaten als Problem erwiesen.

**Aufgabe** der vorliegenden Erfindung ist es, ein Fahrzeug mit verbessertem Schutz für die darin befindlichen Fahrzeuginsassen gegen Mineneinwirkung anzugeben.

Diese Aufgabe wird erfindungsgemäß bei einem Fahrzeug der eingangs genannten Art durch eine dem Fahrzeugsitz zugeordnete zweite Fußauflage **gelöst**, die oberhalb der ersten Fußauflage angeordnet ist.

Durch die zweite dem Fahrzeugsitz zugeordnete Fußauflage ist es dem Fahrzeuginsassen möglich, je nach Gefahrenlage wahlweise entweder die erste Fußauflage oder die zweite Fußauflage zu benutzen. Durch Benutzung der zweiten Fußauflage wird zwar der Sitzkomfort des Fahrzeuginsassen durch die eher ungünstige Sitzposition verringert, es lässt sich jedoch vorübergehend durch die erhöhte Position der zweiten Fußauflage ein verbesserter Schutz auch gegen solche Minen erreichen, für welche die Schutzklasse des Fahrzeugs im Grunde genommen nicht ausreichen würde. Denn die Strecke, die der Gehäuseboden frei durchbeult, bevor dieser an der zweiten Fußauflage anschlägt, ist größer als der Weg gegenüber der ersten Fußauflage. Zudem werden undefinierte Positionen der Füße vermieden. Es ergibt sich eine mit einfachen Mitteln deutlich verbesserte Schutzwirkung gegen Mineneinwirkung.

Bei normalen Fahrten in aufgeklärtem Gelände benutzt der Fahrzeuginsasse, bei dem es sich insbesondere um einen Soldaten handeln kann, die untere Fußstütze in bequemer Sitzposition und bleibt bei Minenangriffen mit Ladungsgrößen, für die das Fahrzeug ausgelegt wurde, unverletzt. Bei Fahrten in feindlichen Gebieten oder bei kritischen Streckenabschnitten wie Brückenzufahrten, Baustellen, Abwasserkanälen usw. benutzt der Soldat bewusst die obere Fußstütze und kann damit Fußverletzungen bei Überlastangriffen mit sehr großen Ladungen vorbeugen. Denn auch bei sehr großen Verformungen des Gehäusebodens schlägt dieser nicht unmittelbar bis an die Fußauflage durch. Dafür nimmt er vorübergehend eine unbequeme Sitzhaltung in Kauf.

Die Erfindung sieht vor, dass beide Fußauflagen gegenüber dem Gehäuseboden des Fahrzeuggehäuses derart blastentkoppelt angeordnet sind, dass eine sich infolge einer Minendetonation ergebende Durchbeulung des Gehäusebodens nicht unmittelbar in die Fußauflagen durchschlägt.

Eine vorteilhafte Ausgestaltung der Erfindung sieht vor, dass die zweite Fußauflage zwischen einer Ruhestellung und einer Nutzstellung bewegbar ausgebildet ist. Auf diese Weise kann die zweite Fußlage nur im Bedarfsfall in deren Nutzstellung bewegt werden. In der Ruhestellung kann die zweite Fußauflage eine kompakte, die üblichen Arbeitsabläufe nicht behindernde Stellung einnehmen.

Vorteilhaft ist in diesem Zusammenhang eine weitere Ausgestaltung, nach welcher die zweite Fußauflage über eine Rückstellmechanik zwischen der Ruhestellung und der Nutzstellung bewegbar ausgebildet ist. Über die Rückstellmechanik lässt sich die Fußauflage definiert zwischen der Ruhestellung und der Nutzstellung hin und her bewegen. In einer einfachen Ausgestaltung ist die Rückstellmechanik manuell betätigbar, d. h. der Fahrzeuginsasse kann die Fußauflage von Hand manuell zwischen der Ruhestellung und der Nutzstellung bewegen.

Eine besonders vorteilhafte, da bedienerfreundliche Ausgestaltung sieht vor, dass die Rückstellmechanik als in Richtung der Ruhestellung selbst rückstellende Rückstellmechanik ausgebildet ist. Der Fahrzeuginsasse braucht bei einer solchen Ausgestaltung die Rückstellmechanik nur in Richtung der Nutzstellung selbst zu betätigen. Die Rückstellung in Richtung der Ruhestellung erfolgt selbsttätig. Hierdurch ergibt sich ein verbesserter Bedienkomfort. Zudem wird durch die selbsttätige Rückstellung vermieden, dass die zweite Fußauflage auch bei Nichtgebrauch unbeabsichtigt in deren Nutzstellung verbleibt und irgendwelche Arbeitsabläufe innerhalb des Fahrzeugs behindert werden.

In konstruktiv vorteilhafter Weiterbildung wird vorgeschlagen, dass die Rückstellmechanik ein als ein federbetätigtes, insbesondere als Schiebe-, Klapp- oder Rollelement ausgebildetes Rückstellelement aufweist. Die Feder des Rückstellelements kann in Richtung der Ruhestellung vorgespannt sein. Bei Entlastung der zweiten Fußauflage kann diese daher selbsttätig über die Kraft der Feder in deren Ruhestellung zurückbewegt werden, was beispielsweise dadurch geschehen kann, dass der Fahrzeuginsasse seine Füße von der Fußauflage anhebt.

Alternativ oder zusätzlich kann die Rückstellmechanik ein elastisch verformbares Rückstellelement aufweisen. Bei einem solchen Element kann die Rückstellung durch elastische Rückverformung erfolgen. Denkbar sind insbesondere gummielastische Elemente, insbesondere in Form von Seilen, Gurten oder Schlingen.

Eine weitere vorteilhafte Ausgestaltung sieht vor, dass die zweite Fußauflage starr oder elastisch ausgebildet ist. Beispielsweise kann die Fußauflage als eine starre Platte ausgebildet sein, auf welche die Füße des Insassen von oben her aufgesetzt werden. Alternativ kann es sich auch um ein elastisches Gebilde handeln, in welche die Füße nach Art einer die Füße aufnehmenden Fußschlinge eingelegt werden.

Eine weitere Ausgestaltung sieht vor, dass die zweite Fußauflage an einem gegenüberliegenden Fahrzeugsitz im Bereich zwischen zwei gegenüberliegenden Fahrzeugsitzen an einem gegenüberliegenden Waffenhalter, an einem gegenüberliegenden Verstauteil oder am Gehäusedach des Fahrzeuggehäuses befestigt ist. Entscheidend ist in diesem Zusammenhang, dass die Fußauflage nicht direkt mit dem Gehäuseboden des Fahrzeuggehäuses gekoppelt ist, so dass ein auf dem Gehäuseboden einwirkender Blast nicht unmittelbar auf die zweite Fußauflage übertragen wird.

Um eine verbesserte Schutzwirkung bei der Benutzung der zweiten Fußauflage zu erreichen, wird in weiterer Ausgestaltung vorgeschlagen, dass die zweite Fußauflage mit einem vertikalen Abstand von mindestens 50 mm, bevorzugt mindestens 100 mm und noch bevorzugter mindestens 200 mm, oberhalb der ersten Fußauflage angeordnet ist. Denkbar sind auch Anordnungen, bei welchen der vertikale Abstand 300 mm und mehr beträgt, wobei sich bei derartigen Abständen jedoch ein deutlich reduzierter Sitzkomfort für den die zweite Fußauflage nutzenden Fahrzeuginsassen ergibt.

Eine konstruktiv vorteilhafte Ausgestaltung sieht ferner vor, dass mehrere Fahrzeugsitze und die diesen zugeordneten zweiten Fußauflagen unter Bildung eines Mittelgangs einander gegenüberliegend angeordnet sind, wobei der Fahrzeugsitz und die diesem zugeordnete zweite Fußauflage auf unterschiedlichen Seiten des Mittelgangs angeordnet sind. Auf diese Weise kann ein Fahrzeuginsasse in einem Fahrzeugsitz sitzen und seine Füße quer zum Mittelgang über diesen herüber auf der zweiten Fußauflage ablegen. Die Anordnung kann wechselweise sein, dass jeweils zwischen zwei Fahrzeugsitzen eine zweite Fußauflage vorgesehen ist. Die Fahrzeuginsassen sitzen sich in diesem Fall nicht direkt einander gegenüber, sondern seitlich etwas versetzt.

Eine vorteilhafte Ausgestaltung sieht in diesem Zusammenhang vor, dass die zweiten Fußauflagen in deren Nutzstellung zumindest teilweise in den Mittelgang hineinragen und diesen in deren Ruhestellung freigeben. Sobald die Fahrzeuginsassen ihre Füße von der zweiten Fußauflage anheben, kann diese selbsttätig, beispielsweise getrieben über die Kraft einer Rückstellfeder, in deren Ruhestellung bewegt werden. Hierdurch wird der Platz im Bereich des Mittelgangs unverzüglich freigegeben und die Fahrzeuginsassen können beispielsweise in Gefahrensituationen oder beim raschen Absitzen von dem Fahrzeug den Mittelgang ohne Verzögerungen passieren.

Weitere Einzelheiten und Vorteile der vorliegenden Erfindung werden nachfolgend unter Zuhilfenahme der beigefügten Zeichnungen von Ausführungsbeispielen erläutert werden. Darin zeigen:
- Fig. 1: eine schematische Ansicht eines Fahrzeuggehäuses in einem Querschnitt und
- Fig. 2: eine der Darstellung in Fig. 1 entsprechende Ansicht gemäß einer zweiten Ausführung.

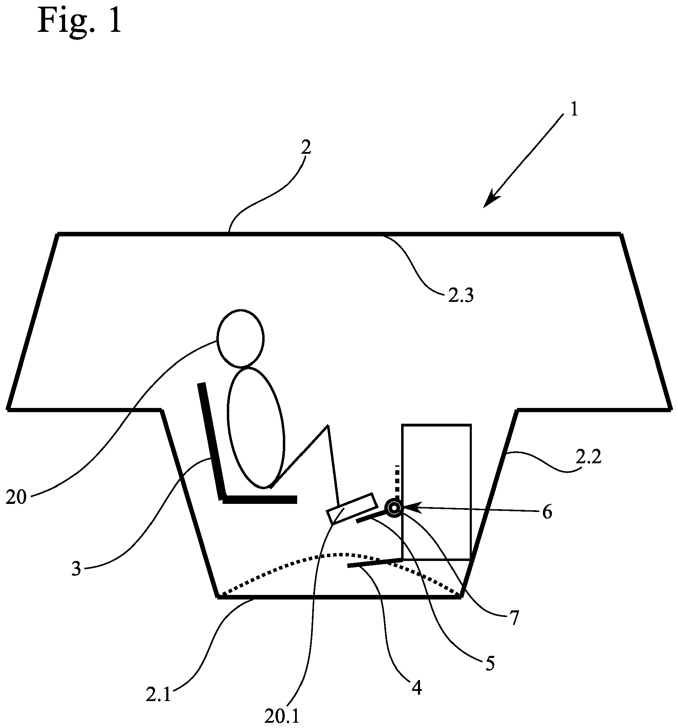

In Fig. 1 dargestellt ist das Fahrzeuggehäuse 2 eines militärischen Fahrzeugs 1, wie beispielsweise eines rad- oder kettengetriebenen Schützenpanzers, eines Transportfahrzeugs, eines Ambulanzfahrzeugs, eines Truppentransportfahrzeugs oder eines ähnlichen Fahrzeugs 1.

Bei dem Fahrzeuggehäuse 2 handelt es sich um eine gegen Mineneinwirkung geschützt ausgebildete Fahrzeugwanne. Das Fahrzeuggehäuse 2 kann aus einer geschweißten Struktur aus Panzerstahl bestehen. Wie der Darstellung in Fig. 1 ferner zu entnehmen ist, weist das Fahrzeuggehäuse 2 an dessen Unterseite einen Fahrzeugboden 2.1 auf, welcher mit dem Gehäusedach 2.3 über Gehäusewände 2.2 verbunden ist, wobei die Gehäusewände 2.2 sich nicht geradlinig vom Gehäuseboden 2.1 zum Fahrzeugdach 2.3 erstrecken, sondern zur Aufnahme der Fahrzeugräder teilweise einen seitlichen Versatz aufweisen.

Die Fahrzeuginsassen 20 befinden sich in sitzender Position innerhalb des minensicher ausgeführten Fahrzeuggehäuses 2. Hierbei sitzen die Fahrzeuginsassen 20 auf Fahrzeugsitzen 3, welche minensicher ausgeführt sind. Die minensichere Ausführung der Fahrzeugsitze 3 bedingt, dass diese einen Abstand gegenüber dem Gehäuseboden 2.1 aufweisen, welcher sich infolge einer Minendetonation gemäß der punktiert eingezeichneten Linie dynamisch nach oben durchbeult. Der Abstand des Fahrzeugsitzes 3 ist dabei derart gewählt, dass eine entsprechend der Schutzklasse des Fahrzeugs 1 maximal zu erwartende Durchbeulung nicht zu einem Anschlagen des Gehäusebodens 2.1 an dem Fahrzeugsitz 3 führt.

Problematischer als bei dem Sitz 3 ist die Situation im Bereich der Füße 20.1 des Fahrzeuginsassen 20, die sich näher an dem Gehäuseboden 2.1 befinden. Im unteren Bereich des Gehäuses 2 ist eine erste Fußstütze 4 für die Füße 20.1 vorgesehen, die dem Sitz 3 zugeordnet ist und von dem Fahrzeuginsassen 20 ohne weiteres genutzt werden kann. Bei der Fußstütze 4 handelt es sich um die Standard-Fußstütze 4 für geringe Bodenbeulung entsprechend der Schutzklasse des Fahrzeugs 1. Die gesamte Konzeptionierung des Fahrzeugs 1 ist daher nicht für Minen einer solchen Stärke ausgelegt, die aufgrund der sich ergebenden Durchbeulung des Gehäusebodens 2.1 zu einer Kollision des Gehäusebodens 2.1 mit der Fußstütze 4 führen.

Die punktiert dargestellte Durchbeulung des Gehäusebodens 2.1 stellt eine Überbelastung des Fahrzeugs 1 dar. Für eine derartige Belastung ist das Fahrzeug 1 von dessen Gesamtkonzept her nicht ausgelegt. Gleichwohl hält das Fahrzeuggehäuse 2 auch solchen Belastungen stand, ohne dass ein Abreißen beispielsweise des Gehäusebodens 2.1 von den Gehäusewänden 2.3 zu befürchten steht. Problematisch ist jedoch, dass die Durchbeulung mit Erreichen einer kritischen Minenbelastung ein solches Maß angenommen hat, dass der Gehäuseboden 2.1 mit der unteren Fußauflage 4 kollidiert.

Diese hochdynamischen Abläufe lassen schlimmste Verletzungen der Füße 20.1 des Fahrzeuginsassen 20 befürchten.

Aus diesem Grund ist erfindungsgemäß eine zweite Fußauflage 5 in gegenüber der unteren Fußauflage 4 erhöhter Position vorgesehen. Der Abstand zwischen der unteren Fußauflage 4 und der oberen Fußauflage 5 beträgt beim Ausführungsbeispiel etwa 200 mm. Hierdurch ergibt sich ein weitaus besserer Schutz für die Fahrzeuginsassen 20, dies jedoch unter Inkaufnahme einer ergonomisch ungünstigen Sitzposition, bei welcher die Füße 20.1 des Fahrzeuginsassen 20 nahezu auf dem gleichen Niveau wie die Sitzfläche des Sitzes 3 liegen.

Bei der zweiten Fußauflage 5 handelt es sich daher nur um eine Art Behelfs-Fußauflage 5, welche im Falle erhöhter Gefahr vorübergehend verwendet werden kann. Da die Fußauflage 5 im normalen Fahrbetrieb die Arbeitsabläufe innerhalb des Fahrzeugs 1 behindern könnte, ist diese über einen Rückstellmechanismus 6 zwischen der in Fig. 1 in durchgezogener Linie dargestellten Nutzstellung und der punktiert dargestellten Ruhestellung bewegbar ausgebildet.

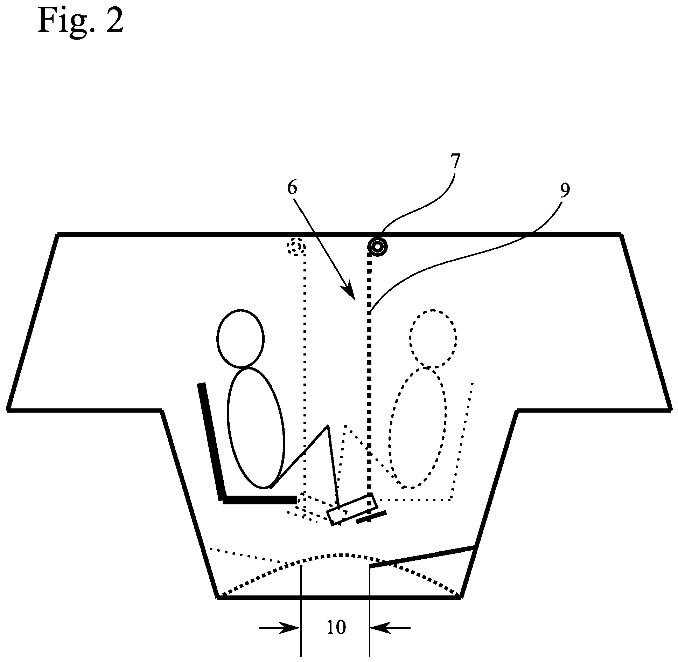

Die Rückstellmechanik 6 weist bei der Ausführung gemäß Fig. 1 ein in Richtung der Ruhestellung federbelastetes Rückstellelement 7 nach Art eines Klappelements auf. Sobald der Fahrzeuginsasse 20 daher seine Füße 20.1 von der zweiten Fußauflage 5 anhebt, bewegt sich diese automatisch zurück in deren Ruhestellung. Im Gegensatz dazu weist die Rückstellmechanik 6 gemäß der Ausführung in Fig. 2, ein federbelastetes Rückstellelement 7 auf, welches über einen Gurt 9 mit der zweiten Fußauflage 5 gekoppelt und nach Art eines Aufrollelements ausgebildet ist.

In beiden Fällen ist die Ausbildung der Rückstellmechanik 6 derart, dass ein automatisches Rückstellen der zweiten Fußauflage 5 erfolgt, sobald der Fahrzeuginsasse 20 seine Füße 20.1 von der zweiten Fußauflage 5 entfernt.

Hierdurch wird erreicht, dass der in Fig. 2 dargestellte Mittelgang 10 zwischen zwei sich gegenüberliegenden Sitzen 3 unmittelbar nach dem Abheben der Füße 20.1 von der zweiten Fußauflage 5 freigegeben wird. Verzögerungen beim Verlassen des Fahrzeugs 1, die unter Umständen mit Gefahren für Leib und Leben der Fahrzeuginsassen 20 verbunden sein könnten, werden hierdurch vermieden.

Alternativ ist es auch denkbar, dass die zweite Fußauflage 5 beispielsweise über ein aktives Antriebsmittel, wie einen Stellmotor oder ähnliches zwischen dessen Ruhestellung und dessen Nutzstellung hin und her bewegt werden kann. Die entsprechende Bewegung kann beispielsweise vom Fahrzeugkommandanten initiiert werden, sobald dieser eine Situation mit erhöhtem Gefahrenpotenzial für die Fahrzeuginsassen 20 ausmacht.

Durch die erfindungsgemäße zweite Fußauflage 5 lässt sich das Schutzniveau gegenüber einer Minendetonation vorübergehend unter Inkaufnahme ergonomisch ungünstiger Sitzpositionen erhöhen. Hierdurch wird in bestimmten Gefahrensituationen auf vergleichsweise einfache Art und Weise ein deutlich besserer Schutz der Fahrzeuginsassen 20 gegenüber teilweise sehr komplizierten Fußverletzungen erreicht.

### Bezugszeichen:

- 1: Fahrzeug
- 2: Fahrzeuggehäuse
- 2.1: Gehäuseboden
- 2.2: Gehäusewand
- 2.3: Gehäusedach
- 3: Fahrzeugsitz
- 4: Fußauflage
- 5: Fußauflage
- 6: Rückstellmechanik
- 7: Rückstellelement
- 8: Verstauteil
- 9: Gurt
- 10: Mittelgang
- 20: Fahrzeuginsasse
- 20.1: Füße

## Patentansprüche

1. Fahrzeug, insbesondere militärisches Fahrzeug, mit einem gegen Mineneinwirkung geschützt ausgebildeten Fahrzeuggehäuse (2), in welchem mindestens ein Fahrzeugsitz (3) und eine dem Fahrzeugsitz (3) zugeordnete Fußauflage (4) vorgesehen sind,
**dadurch gekennzeichnet,**
**dass** eine dem Fahrzeugsitz (3) zugeordnete zweite Fußauflage (5) in einer eine Sitzposition des Fahrzeuginsassen auf dem Fahrzeugsitz (3) betreffendem Nutzstellung oberhalb der ersten Fußauflage (4) angeordnet ist, wobei beide Fußauflagen (4, 5) gegenüber dem Gehäuseboden (2.1) des Fahrzeuggehäuses (2) derart blastentkoppelt angeordnet sind, dass eine sich infolge einer Minendetonation ergebende Durchbeulung des Gehäusebodens (2.1) nicht unmittelbar in die Fußauflagen (4, 5) durchschlägt.

2. Fahrzeug nach Anspruch 1, **dadurch gekennzeichnet, dass** die zweite Fußauflage (5) zwischen einer Ruhestellung und der Nutzstellung bewegbar ausgebildet ist.

3. Fahrzeug nach Anspruch 2, **dadurch gekennzeichnet, dass** die zweite Fußauflage (5) über eine Rückstellmechanik (6) zwischen der Ruhestellung und der Nutzstellung bewegbar ausgebildet ist.

4. Fahrzeug nach Anspruch 3, **dadurch gekennzeichnet, dass** die Rückstellmechanik (6) als in Richtung der Ruhestellung selbstrückstellende Rückstellmechanik (6) ausgebildet ist.

5. Fahrzeug nach Anspruch 3 oder Anspruch 4, **dadurch gekennzeichnet, dass** die Rückstellmechanik (6) ein als federbetätigtes Schiebe-, Klapp- oder Rollelement ausgebildetes Rückstellelement (7) aufweist.

6. Fahrzeug nach einem der Ansprüche 3 bis 5, **dadurch gekennzeichnet, dass** die Rückstellmechanik (6) ein elastisch verformbares Rückstellelement aufweist.

7. Fahrzeug nach einem der Ansprüche 3 bis 6, **dadurch gekennzeichnet, dass** die Rückstellmechanik (6) ein aktiv betätigbares Rückstellelement aufweist.

8. Fahrzeug nach einem der vorhergehenden Ansprüche, **dadurch gekennzeichnet, dass** die zweite Fußauflage (5) starr oder elastisch ausgebildet ist.

9. Fahrzeug nach einem der vorhergehenden Ansprüche, **dadurch gekennzeichnet, dass** die zweite Fußauflage (5) an einem gegenüberliegenden Fahrzeugsitz (3), im Bereich zwischen zwei gegenüberliegenden Fahrzeugsitzen (3), an einem gegenüberliegenden Waffenhalter, an einem gegenüberliegenden Verstauteil (8) oder am Gehäusedach (2.3) des Fahrzeuggehäuses (2) befestigt ist.

10. Fahrzeug nach einem der vorhergehenden Ansprüche, **dadurch gekennzeichnet, dass** die zweite Fußauflage (5) mit einem vertikalen Abstand von mindestens 50 mm, bevorzugt mindestens 100 mm und noch bevorzugter mindestens 200 mm oberhalb der ersten Fußauflage (4) angeordnet ist.

11. Fahrzeug nach einem der vorhergehenden Ansprüche, **dadurch gekennzeichnet, dass** mehrere Fahrzeugsitze (3) und die diesen zugeordneten zweiten Fußauflagen (5) unter Bildung eines Mittelgangs (10) einander gegenüberliegend angeordnet sind, wobei der Fahrzeugsitz (3) und die diesem zugeordnete zweite Fußauflage (5) auf unterschiedlichen Seiten des Mittelgangs (10) angeordnet sind.

12. Fahrzeug nach Anspruch 11, **dadurch gekennzeichnet, dass** die zweiten Fußauflagen (5) in deren Nutzstellung zumindest teilweise in den Mittelgang (10) hineinragen und diesen in deren Ruhestellung freigeben.

## Claims

1. Vehicle, in particular military vehicle, with a vehicle housing (2) which is designed so as to be protected against the action of mines and in which at least one vehicle seat (3) and a footrest (4) assigned to the vehicle seat (3) are provided, **characterized**
**in that**, in a use position relating to a sitting position of the vehicle occupant on the vehicle seat (3), a second footrest (5) which is assigned to the vehicle seat (3) is arranged above the first footrest (4), wherein the two footrests (4, 5) are arranged so as to be blast-decoupled from the housing floor (2.1) of the vehicle housing (2) in such a manner that buckling of the housing floor (2.1) as a consequence of a detonation of a mine does not directly penetrate the footrests (4, 5).

2. Vehicle according to Claim 1, **characterized in that** the second footrest (5) is designed to be movable between an inoperative position and the use position.

3. Vehicle according to Claim 2, **characterized in that** the second footrest (5) is designed to be movable between the inoperative position and the use position via a resetting mechanism (6).

4. Vehicle according to Claim 3, **characterized in that** the resetting mechanism (6) is designed as a resetting mechanism (6) which automatically resets in the direction of the inoperative position.

5. Vehicle according to Claim 3 or Claim 4, **characterized in that** the resetting mechanism (6) has a resetting element (7) designed as a spring-actuated sliding element, folding element or rolling element.

6. Vehicle according to one of Claims 3 to 5, **characterized in that** the resetting mechanism (6) has an elastically deformable resetting element.

7. Vehicle according to one of Claims 3 to 6, **characterized in that** the resetting mechanism (6) has an actively actuable resetting element.

8. Vehicle according to one of the preceding claims, **characterized in that** the second footrest (5) is designed to be rigid or elastic.

9. Vehicle according to one of the preceding claims, **characterized in that** the second footrest (5) is fastened to an opposite vehicle seat (3), in the region between two opposite vehicle seats (3), to an opposite gun rack, to an opposite stowage part (8) or to the housing roof (2.3) of the vehicle housing (2).

10. Vehicle according to one of the preceding claims, **characterized in that** the second footrest (5) is arranged at a vertical distance of at least 50 mm, preferably at least 100 mm and even more preferably at least 200 mm above the first footrest (4).

11. Vehicle according to one of the preceding claims, **characterized in that** a plurality of vehicle seats (3) and the second footrests (5) assigned to the latter are arranged opposite one another with a central aisle (10) being formed, wherein the vehicle seat (3) and the second footrest (5) assigned thereto are arranged on different sides of the centre aisle (10).

12. Vehicle according to Claim 11, **characterized in that** the second footrests (5) in the use position thereof at least partially project into the centre aisle (10) and unblock the latter in their inoperative position.

## Revendications

1. Véhicule, notamment véhicule militaire, comprenant une caisse de véhicule (2) configurée protégée contre l'effet des mines, dans laquelle se trouvent au moins un siège de véhicule (3) et un repose-pieds (4) associé au siège de véhicule (3),
**caractérisé en ce**
**qu'**un deuxième repose-pieds (5) associé au siège de véhicule (3), dans une position d'utilisation concernant une position assise de l'occupant du véhicule sur le siège de véhicule (3), est disposé au-dessus du premier repose-pieds (4), les deux repose-pieds (4, 5) étant montés avec découplage au souffle par rapport au plancher de caisse (2.1) de la caisse de véhicule (2) de telle sorte qu'un voilement du plancher de caisse (2.1) résultant de la détonation d'une mine ne pénètre pas directement dans les repose-pieds (4, 5).

2. Véhicule selon la revendication 1, **caractérisé en ce que** le deuxième repose-pieds (5) est réalisé pour pouvoir être déplacé entre une position de repos et la position d'utilisation.

3. Véhicule selon la revendication 2, **caractérisé en ce que** le deuxième repose-pieds (5) est réalisé pour pouvoir être déplacé entre la position de repos et la position d'utilisation par le biais d'un mécanisme de rappel (6).

4. Véhicule selon la revendication 3, **caractérisé en ce que** le mécanisme de rappel (6) est réalisé sous la forme d'un mécanisme de rappel (6) à rappel automatique en direction de la position de repos.

5. Véhicule selon la revendication 3 ou 4, **caractérisé en ce que** le mécanisme de rappel (6) possède un élément de rappel (7) réalisé sous la forme d'un élément coulissant, rabattable ou roulant actionné par un ressort.

6. Véhicule selon l'une des revendications 3 à 5, **caractérisé en ce que** le mécanisme de rappel (6) possède un élément de rappel déformable par effet élastique.

7. Véhicule selon l'une des revendications 3 à 6, **caractérisé en ce que** le mécanisme de rappel (6) possède un élément de rappel actionnable activement.

8. Véhicule selon l'une des revendications précédentes, **caractérisé en ce que** le deuxième repose-pieds (5) est de configuration rigide ou élastique.

9. Véhicule selon l'une des revendications précédentes, **caractérisé en ce que** le deuxième repose-pieds (5) est fixé à un siège de véhicule (3) opposé, dans la zone entre deux sièges de véhicule (3) opposés, à un porte-arme se trouvant à l'opposé, à une partie d'arrimage (8) se trouvant à l'opposé ou au toit de caisse (2.3) de la caisse de véhicule (2).

10. Véhicule selon l'une des revendications précédentes, **caractérisé en ce que** le deuxième repose-pieds (5) est disposé avec un écart vertical d'au moins 50 mm, de préférence d'au moins 100 mm et encore de préférence d'au moins 200 mm au-dessus du premier repose-pieds (4).

11. Véhicule selon l'une des revendications précédentes, **caractérisé en ce que** plusieurs sièges de véhicule (3) et les deuxièmes repose-pieds (5) qui leur sont associés sont disposés de manière opposée les uns aux autres en formant un couloir central (10), le siège de véhicule (3) et le deuxième repose-pieds (5) qui lui est associé étant disposés sur des côtés différents du couloir central (10).

12. Véhicule selon la revendication 11, **caractérisé en ce que** les deuxièmes repose-pieds (5), dans leur position d'utilisation, font au moins partiellement saillie dans le couloir central (10) et libèrent celui-ci dans leur position de repos.
